Europäisches Patentamt

European Patent Office

Office européen des brevets

(11) Veröffentlichungsnummer: **0 495 156 A2**

## (12) EUROPÄISCHE PATENTANMELDUNG

(21) Anmeldenummer: **91114913.6**

(22) Anmeldetag: **04.09.91**

(51) Int. Cl.5: **C08G 18/66**, C08G 18/40, C08G 18/48, //(C08G18/66, 101:00)

(30) Priorität: **31.12.90 DE 4042267**

(43) Veröffentlichungstag der Anmeldung: **22.07.92 Patentblatt 92/30**

(84) Benannte Vertragsstaaten: **AT BE CH DK ES FR GB IT LI NL SE**

(71) Anmelder: **Willig, Wolfgang Waldblick 4 W-8752 Glattbach(DE)**

(72) Erfinder: **Willig, Wolfgang Waldblick 4 W-8752 Glattbach(DE)**

(54) **Verfahren zur Herstellung von flexiblen Polyurethan-Schaumstoffen.**

(57) Der, durch die Umweltbelastung notwendige Verzicht auf Fluor-Chlor-Kohlenwasserstoffe als Treibmittel für flexible PUR-Schaumstoffe ist mit erheblichen Nachteilen hinsichtlich der Verarbeitung und der Qualität der herzustellenden Teile verbunden, wenn der Ersatz durch Kohlendioxid (aus der Isocyanat-Wasser-Reaktion) als Treibmittel erfolgt.

Jedoch ist es mit der erfindungsgemäßen Verwendung von Polyethylenglykolen (8 bis 20 Kohlenstoffatome) als Kettenverlängerer möglich, die bekannten Vorzüge der flexiblen PUR- Schöume, wie Flexibilität, Weichheit, Gestaltungsfreiheit und Wirtschaftlichkeit zu erhalten.

EP 0 495 156 A2

Rank Xerox (UK) Business Services

Verfahren zur Herstellung von flexiblen Polyurethan-Schaumstoffen. Die Hauptanwendung von flexiblen Polyurethan-Schaumstoffen liegt im Automobil als Lenkräder,Kopfstützen,Schalthebel,Armlehnen, sowie Hinterschäumung von Armaturentafeln und Türverkleidungen. Weitere Anwendung sind Schuhsohlen und Sättel von Fahrrädern. Es ist bekannt,daß durch die Isocyanat-Wasser-Reaktion Harnstoffbindungen und Kohlendioxid entstehen.Das Kohlendioxid kann als Treibmittel zur Herstellung von Polyurethan-Schaumstoffen genutzt werden.

Bei den bisher bekannten flexiblen Polyurethan-Schaumstoffen wurden als Treibmittel hauptsächlich Fluor-Chlor-Kohlenwasserstoffe (FCKW) eingesetzt.Diese Stoffe sind jedoch durch schädigende Einflüsse auf die Ozonschicht in die Kritik geraten und sollen verboten werden.Folglich bietet ausschließlich das aus der Isocyanat-Wasser-Reaktion entstehende Kohlendioxid als Treibmittel für die Zukunft eine akzeptable Alternative Polyurethan-Schaumteile zu erstellen.Durch die Verwendung von Kohlendioxid als Treibmittel ist eine Erhöhung des Wasseranteils in der Rezeptur notwendig. Dadurch ergibt sich ein verändertes Eigenschaftsbild,hin zu größerer Härte und Steifigkeit bedingt durch die entstehenden Harnstoffbindungen.Außerdem ist die Verarbeitung mit wesentlichen Schwierigkeiten verbunden.Zu erwähnen sind das grundlegend veränderte Fließverhalten und der erhöhte Zellinnendruck bei Entformung der geschäumten Teile.

Es ist Stand der Technik als Kettenverlängerungsmittel kurzkettige Diole oder Diamine,wie Butandiol-1,4 , Ethylenglykol und Diethanolamin,einzusetzen.

Aus der GB-PS 1395633 ist bereits ein Verfahren zur Herstellung von flexiblen,flammfesten Polyurethanschaumstoffen bekannt,bei dem man gereinigtes Toluylendiisocyanat,ein mit Ethylenoxid endverkapptes Polyoxyalkylentriol,Wasser und eine Polyoxyalkylenkette enthaltende Verbindung mit Hydroxylendgruppen und einem Molekulargewicht nicht über 325 umsetzt,und zwar unter Mitverwendung handelsüblicher Katalysatoren.Als Polyoxyalkylenketten enthaltende Verbindungen mit Hydroxylendgruppen sind dort Polyethylenglykole der allgemeinen Formel

$$HO\text{-}(CH_2 \cdot CH_2 \cdot O)_n\text{-}CH_2 \cdot CH_2\text{-}OH$$

in der $n = 1$ bis 6 ist genannt.

Der Erfindung liegt die Aufgabe zugrunde die Nachteile hinsichtlich Verarbeitungs- und Endeigenschaften,die sich aus der Treibmittelumstellung ergeben,auszugleichen.

Die Erfindung betrifft somit ein Verfahren zur Herstellung von flexiblen Polyurethanschaumstoffen mit einer Dichte von 0,1 bis 0,8 g/cm3 durch Umsetzung von

a) handelsüblichen Diphenylmethandiisocyanat-Varianten,

b) Polyether- oder Polyesterpolyolen des Molekulargewichtbereichs von 3000 bis 8000,

c) zwei aktive Wasserstoffatome aufweisenden Kettenverlängerungsmitteln,

d) Wasser und

e) handelsüblichen Katalysatoren.Das Verfahren ist dadurch gekennzeichnet,daß man als zwei aktive Wasserstoffatome aufweisende Kettenverlängerungsmittel Polyethylenglykole mit 8 bis 20 Kohlenstoffatomen einsetzt.

Der Vorteil des erfindungsgemäßen Verfahrens ist darin zu sehen,daß es einerseits die Möglichkeit eröffnet,bei der Herstellung von flexiblen Polyurethanschaumstoffen das bisher für diese Zwecke verwendete Toluylendiisocyanat durch handelsübliche Diphenylmethandiisocyanat-Varianten zu ersetzen.Letztere fanden ihr Einsatzgebiet bei der Herstellung vorwiegend von Halbhart- und Hartschaumstoffen, wobei als Treibmittel Fluorchlorkohlenwasserstoffe verwendet wurden.Während ferner nach dem Stand der Technik,die geforderten Qualitätsansprüche bei Verwendung von Trichlormonofluormethan als Treibmittel und den üblichen kurzkettigen Kettenverlängerungsmitteln,wie Butandiol 1,4 und Ethylenglykol,erfüllt werden konnten, wurden diese Qualitätsansprüche durch Austausch von Trichlormonofluormethan durch Wasser nicht mehr erreicht.Erst durch die erfindungsgemäß eingesetzten Kettenverlängerungsmittel gelang es, die Fluorchlorkohlenwasserstoffe durch Wasser zu ersetzen.

| Beispiel: | A | B |
|---|---|---|
| | Teile | Teile |
| Polyetherpolyol (1) OH-Zahl 28 | 81 | 79 |
| Polyethylenglykol 200 (2) | - | 19,7 |
| Polyethylenglykol 400 (3) | 17,5 | - |
| Wasser | 0,5 | 0,3 |
| Pentamethyldiethylentriamin | 0,3 | 1,0 |
| Triethanolamin | 0,25 | - |
| modifiziertes polymeres Diphenylmethandiisocyanat | 35 | 45 |

(1) Als Initiator Glycerin,umgesetzt mit Propylenoxid und Ethylenoxid

(2) handelsübliches Polyethylenglykol mit durchschnittlichem Molekulargewicht von 200

(3) handelsübliches Polyethylenglykol mit durchschnittlichem Molekulargewicht von 400

Mit dem erfindungsgemäßen Verfahren ergeben sich besondere Vorteile, die im wesentlichen darin bestehen,daß die Schaumteile wesentlich bessere Flexibilität (gummielastisches Verhalten) und größere Weichheit besitzen.Weitere Vorteile sind die gute Fließfähigkeit des aufschäumenden Gemisches und geringere Neigung zu Lunkerbildungen.Auch sind kürzere Entformungszeiten möglich.

**Patentansprüche**

1. Verfahren zur Herstellung von flexiblen Polyurethanschaumstoffen mit einer Dichte von 0,1 bis 0,8 g/cm3 durch Umsetzung von

   a) handelsüblichen Diphenylmethandiisocyanat-Varianten,

   b) Polyether- oder Polyesterpolyolen des Molekulargewichtbereichs von 3000 bis 8000,

   c) zwei aktive Wasserstoffatome aufweisenden Kettenverlängerungsmitteln,

   d) Wasser und

   e) handelsüblichen Katalysatoren,

   dadurch gekennzeichnet,daß man als zwei aktive Wasserstoffatome aufweisende Kettenverlängerungsmittel Polyethylenglykole mit 8 bis 20 Kohlenstoffatomen einsetzt.